# EUROPÄISCHE PATENTSCHRIFT

(11) **EP 1 769 143 B1**
(45) Veröffentlichungstag und Bekanntmachung des Hinweises auf die Patenterteilung: **10.10.2007**
(21) Anmeldenummer: 05757353.7
(22) Anmeldetag: 01.07.2005
(51) Int. Cl.: F01N 3/28

(54) **ABGASREINIGUNGSVORRICHTUNG FÜR KRAFTFAHRZEUGE**
EXHAUST GAS PURIFICATION DEVICE FOR MOTOR VEHICLES
DISPOSITIF D'EPURATION DE GAZ D'ECHAPPEMENT DESTINE A DES VEHICULES

(30) Priorität: 16.07.2004 DE 102004034584; 19.04.2005 DE 102005017881
(43) Veröffentlichungstag der Anmeldung: 04.04.2007
(73) Patentinhaber: Faurecia Abgastechnik GmbH, 90765 Fürth (DE)
(72) Erfinder: BUCKEL, Thomas, 90571 Schwaig (DE); STOEPLER, Walter, 91086 Aurachtal (DE)
(74) Vertreter: Mörtel & Höfner
(86) Internationale Anmeldenummer: PCT/EP2005/007127
(87) Internationale Veröffentlichungsnummer: WO 2006/007956

(56) Entgegenhaltungen:
- DE-A1- 3 512 580
- US-A- 4 004 887
- PATENT ABSTRACTS OF JAPAN Bd. 018, Nr. 651 (C-1285), 9. Dezember 1994 (1994-12-09) & JP 06 254410 A (SHOWA AIRCRAFT IND CO LTD), 13. September 1994 (1994-09-13)

## Beschreibung

Die Erfindung betrifft eine Abgasreinigungsvorrichtung für Kraftfahrzeuge mit einem in einem Gehäuse gelagerten Monolithen mit einer vorderen und einer hinteren, sich jeweils quer zur Mittellängsachse des Gehäuses erstreckenden Stirnseite, und einem zwischen Monolith und einem diesen umfassenden Gehäuseabschnitt vorhandenen Spaltraum. Der Monolith kann beispielsweise als Katalysator, als NOₓ-Speicher, als Diesel-Partikelfilter oder dergleichen ausgestaltet sein. Im Spaltraum ist bei herkömmlichen Abgasvorrichtungen eine Lagermatte vorhanden. Vielfach werden sogenannte Quellmatten verwendet, also Mineralfasermatten mit eingelagerten Blähglimmer-Partikeln. Es werden aber auch andere, Blähglimmer-freie Mattensysteme eingesetzt. In allen Fällen kommt der im Spaltraum angeordneten und sich praktisch über die gesamte Länge eines Monolithen erstreckenden Lagermatte eine erhebliche Bedeutung sowohl hinsichtlich einer axialen als auch einer radialen Lagerung des Monolithen zu. In bisherigen Abgasreinigungsvorrichtungen können daher nur qualitativ hochwertige Lagermatten eingesetzt werden, welche z.B. in der Lage sind, wechselnde Spaltraumgrößen beim Betrieb des Katalysators, die sich aus unterschiedlichen Wärmeausdehnungskoeffizienten von Monolith und Gehäuse ergeben, zu.kompensieren.

Aufgabe der Erfindung ist es, eine Abgasreinigungsvorrichtung mit einer alternativen Lagerung eines Monolithen vorzuschlagen, bei der z.B. die Anforderungen an eine im Spaltraum angeordnete Lagerungsmatte verringert sind oder bei der auf den Einsatz solcher Lagermatten ganz verzichtet werden kann.

Diese Aufgabe wird nach Anspruch 1 dadurch gelöst, dass sich der Monolith zumindest mit einer Stirnseite an einzelnen, am Gehäuse fixierten Halteelementen mittel- oder unmittelbar abstützt, welche sich etwa radial nach innen erstrecken und die Stirnseite teilweise überlappen. Es hat sich gezeigt, dass mit dieser Ausgestaltung ein Monolith derart sowohl in Axialrichtung als auch in Radialrichtung in einem Gehäuseabschnitt fixierbar ist, dass an eine im Spaltraum vorhandene Lagermatte geringere Anforderungen hinsichtlich der von ihr ausgeübten Haltekräfte gestellt werden können. Es können relativ einfache und kostengünstige, beispielsweise hauptsächlich zur thermischen Isolierung des Gehäuses dienende Matten eingesetzt werden. Dies lässt sich insbesondere dann erreichen, wenn zwischen einem Haltelement und einer Stirnseite ein Zwischenelement angeordnet ist, das einen direkten Kontakt zwischen dem in der Regel aus keramischen Material gefertigten Monolithen und den metallischen Halteelementen verhindert und damit die Gefahr eines Abriebs des keramischen Monolithen verringert. Aufgrund der Ausgestaltung der axialen Lagerung des Monolithen in Form einzelner Halteelemente wird die Stirnseite des Monolithen nur in einem relativ geringem Ausmaß überdeckt und dementsprechend dessen Ein- oder Ausströmquerschnitt nur wenig verringert.

Als Zwischenelemente werden vorzugsweise solche eingesetzt, die elastisch verformbar sind, die insbesondere aus einem Drahtgestrick bestehen. Ein derartiges Material lässt sich so auslegen, dass es einen axialen Kompressionsbereich aufweist, innerhalb dem die von ihm ausgeübten Rückstellkräfte noch eine zuverlässige Lagerung des Monolithen gewährleisten. Auf diese Weise lassen sich Längentoleranzen des Monolithen ausgleichen.

Die Halterung in Radialrichtung kann optimiert werden, wenn die Zwischenelemente einen sich in den Spaltraum hinein erstreckenden Axialabschnitt aufweisen. Durch Auswahl des Materials und der Dimensionierung des Axialabschnitts lässt sich eine zuverlässige Lagerung des Monolithen erreichen, ohne dass im Spaltraum eine Lagerungsmatte erforderlich ist. Bei einer anderen bevorzugten Ausgestaltung ist der Axialabschnitt als Ring ausgebildet, der ein oder mehrere Halteelemente trägt. Ein solcher Axialabschnitt verhindert, dass Abgas unter Umgehung des Monolithen durch den Spaltraum strömt. Eine weitere, gegebenenfalls zusätzlich in Betracht zu ziehende Möglichkeit, einen solchen Bypass zu verhindern besteht darin, die Halteelemente am Innenrand eines sich mit seiner Planebene quer zur Mittellängsachse des Monolithen bzw. des diesen umfassenden Gehäuseabschnitts verlaufenden flanschartigen Abdeckbereich anzuformen, welcher den Spaltraum zumindest teilweise überdeckt.

Eine besonders bevorzugte Ausgestaltung der Halteelemente sieht vor, dass diese in Axialrichtung eine Federwirkung aufweisen. Dadurch können Längentoleranzen eines Monolithen und auch Dickentoleranzen von Zwischenelementen ausgeglichen werden. Die Steifigkeit bzw. die Federwirkung der Halteelemente kann auf unterschiedliche Weise, etwa durch Wahl einer bestimmten Wandstärke, durch Versteifungssicken, durch Einschnürungen oder dergleichen erreicht werden.

Bei einem ersten bevorzugten Ausführungsbeispiel sind die Halteelemente mittel- oder unmittelbar an der Stirnseite des den Monolithen umfassenden Gehäuseabschnitts angeformt. Bei einem zweiten bevorzugten Ausführungsbeispiel sind die Halteelemente Teil eines als separates Teil ausgebildeten Rings, welcher an der Innen- oder Außenseite des Gehäuseabschnitts fixiert ist. Ein Vorteil beider Ausführungsbeispiele besteht unter anderem darin, dass die Fixierung des Monolithen in einem Gehäuseabschnitt völlig unabhängig von sonstigen stirnseitig an diesen anzubringenden Bauteilen ist. Ein und die selbe Baueinheit kann für unterschiedlich gestaltete Abgasvorrichtungen verwendet werden, indem beispielsweise je nach Einsatzart unterschiedlich gestaltete und bemessene Gehäusetrichter eingesetzt werden. Das Anbringen von Gehäusetrichtern oder das Verbinden mehrerer Baueinheiten mit Zwischenrohrstücken sind im Vergleich zur Herstellung bzw. Montage einer Baueinheit 7 relativ einfache Montagetätigkeiten, die in Betriebsstätten mit geringerem technischen Standard ausgeführt werden können.

Bei einem dritten Ausführungsbeispiel schließlich sind die Halteelemente an einem an der Eingangs- bzw. Ausgangsseite des genannten Gehäuseabschnitts angebrachten Gehäusetrichter fixiert. Vorzugsweise liegt der Gehäusetrichter mit einem Endabschnitt, an dessen Stirnseite die Halteelemente angeformt sind, in einem die Stirnseite des Monolithen überragenden Endabschnitt des Gehäuseabschnitts axialfixiert ein. Von Vorteil ist hier, dass gleichzeitig mit der Anbindung der Gehäusetrichter an den Gehäuseabschnitt eine Fixierung des Monolithen erfolgt, indem nämlich die Gehäusetrichter mit ihren Halteelementen unter axialer Kraftbeaufschlagung gegen die Stirnseiten des Monolithen gepresst und bei vorgegebener Axialkraft oder vorgegebenen Abstand der Gehäusetrichter diese am Gehäuseabschnitt fixiert werden.

Die Erfindung wird im Folgenden unter Bezugnahme auf die beigefügten Zeichnungen näher erläutert. Es zeigen:
- Fig.1: eine perspektivische Darstellung eines erstes Ausführungsbeispiel einer Abgasreinigungsvorrichtung mit einer Baueinheit, die einen Gehäuseabschnitt und einen darin gelagerten Monolithen umfasst,
- Fig.2: eine schematisierte Draufsicht auf die Stirnseite einer Baueinheit,
- Fig.3: eine schematisierte Draufsicht auf die Stirnseite einer gegenüber Fig. 2 abgewandelten Baueinheit,
- Fig.4: eine weitere Abwandlung in einer Fig.2 entsprechenden Darstellung,
- Fig.5: eine weitere Abwandlung in einer Fig.2 entsprechenden Darstellung,
- Fig.6: das Detail VI aus Fig.2, jedoch mit anders gestalteten Halteelementen,
- Fig.7 A,B: einen Blechzuschnitt zur Bildung eines einen Monolithen umfassenden Gehäuseabschnitts,
- Fig.8 A-D: schematische Schnittdarstellungen des Stirnkantenbereiches einer Baueinheit, etwa entsprechend der Linie VIII-VIII in Fig.1, welche unterschiedliche Möglichkeiten zur Anbindung eines Gehäusetrichters verdeutlichen,
- Fig.9: den Stirnantenbereich einer Baueinheit etwa entsprechend der Linie VIII-VIII in Fig.1,
- Fig.10: das Zwischenelement von Fig.9 in Draufsicht,
- Fig.11: eine schematisierte Darstellung eines Herstellungsverfahrens für eine Baueinheit,
- Fig.12: eine schematisierte Darstellung einer Verfahrensvariante,
- Fig.13: eine gegenüber Fig. 1 abgewandelte Baueinheit in perspektivischer Darstellung,
- Fig.14: eine schematische Schnittdarstellung des Stirnkantenbereichs einer Baueinheit mit angesetztem Trichter,
- Fig.15: eine schematische Schnittdarstellung des Verbindungsbereiches zweier über ein Verbindungs-Rohrstück miteinander verbundener Baueinheiten,
- Fig.16: eine perspektivische Ansicht eines zweiten Ausführungsbeispiels, mit einer Baueinheit, bei der die Halteelemente an einem separaten Ring angeformt sind,
- Fig.17: eine die Herstellung einer Baueinheit gem. Fig. 16 verdeutlichende schematische Querschnitt-Darstellung,
- Fig.18: die Baueinheit von Fig.16 mit angesetztem Gehäusetrichter im Längsschnitt,
- Fig.19: eine Variante der Baueinheit von Fig.18 mit auf alternative Weise angesetztem Gehäusetrichter,
- Fig.20: einen Ausschnitt einer Baueinheit, bei der ein Halteelemente tragender Ring an der Außenseite des Gehäuseabschnitts fixiert ist,
- Fig.21 A,B: schematische Schnittdarstellungen eines dritten Ausführungsbeispiels, etwa entsprechend der Linie VIII-VIII in Fig.1, bei dem die Haltelemente an einem Gehäusetrichter fixiert sind.

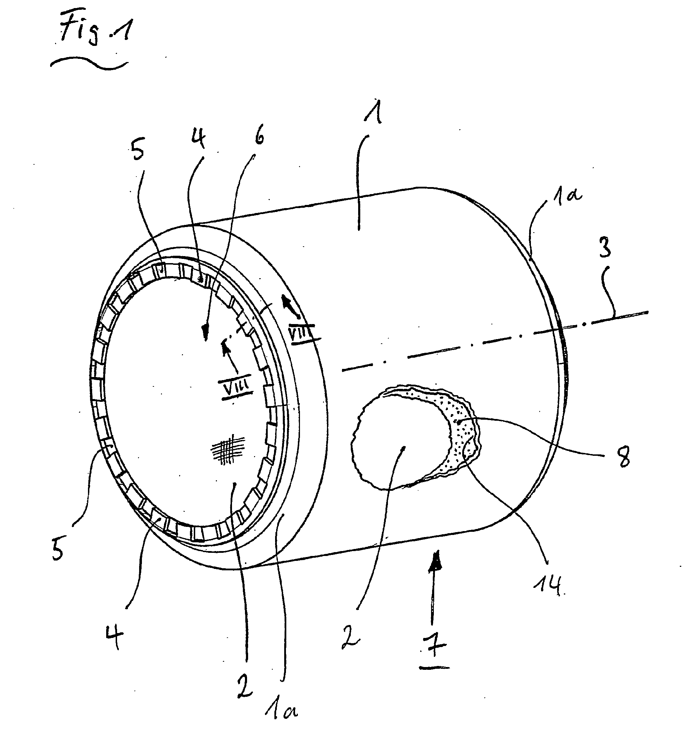

Fig.1 zeigt ein erstes Ausführungsbeispiel einer Abgasreinigungsvorrichtung, bei der ein im wesentlichen rohrförmig ausgebildeter Gehäuseabschnitt 1 einen aus keramischen Material gefertigten, in Richtung seiner Mittellängsachse 3 von Strömungskanälen (nicht dargestellt) durchzogenen Monolithen 2 aufnimmt, und bei der an den Stirnenden des Gehäuseabschnitts 1 Haltelemente 4 angeformt sind, die über den Umfang des Gehäuseabschnitts 1 verteilt sind und die sich etwa radial nach innen erstrecken. Zwischen den Haltelementen 4 sind gleich große Abstände 5 vorhanden. Die Haltelemente 4 sind von einer ursprünglichen Stellung, in der sie sich etwa parallel zur Mittellängsachse 3 erstrecken (nicht dargestellt), durch eine plastische Umformung in eine Stellung gebracht, in der sie eine Stirnseite 6 des Monolithen 2 mit einer Haltekraft beaufschlagen. Die Haltelemente 4 weisen z.B. eine etwa rechteckige oder trapezförmige Umrissform auf und sind alle gleich gestaltet. Dies trifft auch für die Abstände 5 zwischen den Halteelementen 4 zu. Weiterhin haben alle Haltelemente 4 die gleiche Dicke. Die Halteelemente 4 üben somit allesamt jeweils die gleiche Haltekraft auf den Monolithen 2 aus. Halteelemente 4 können an beiden Stirnseiten des Monolithen angeordnet sein. Dieser ist dann in Axialrichtung zwischen den Halteelementen 4, gegebenenfalls unter Zwischenlage elastischer Zwischenelemente eingespannt. Denkbar ist aber auch, dass sich der Monolith 2 nur mit einer Stirnseite am Halteelement 4 und mit seiner anderen Seite an einem anders gestalteten Gegenlager, z.B. einem am Gehäuseabschnitt 1 fixierten und die Stirnseite des Monolithen in gewissem Ausmaß radial überdeckenden Ring abstützt. Die Endbereiche 1a des Gehäuseabschnitts 1 sind soweit nach innen gezogen, dass sie einen zwischen dem Monolithen 2 und der Wand des Gehäuseabschnitts 2 vorhandenen Spaltraum 14 überdecken. Dadurch ist verhindert, dass Abgas unter Umgehung des Monolithen 2 durch den Spaltraum 14 hindurchströmt. Für.den Fall, dass im Spaltraum 14 eine Lagermatte 8, etwa eine Mineralfasermatte angeordnet ist, verhindern die nach innen gezogenen Endbereiche 1a, dass die Kanten der Lagermatte 8 durch heißes pulsierendes Abgas erodiert werden. Der Gehäuseabschnitt 1 bildet mit dem darin angeordneten Monolithen 2 eine Baueinheit 7, die für den modularen Aufbau von Abgasvorrichtungen verwendbar ist. An die Baueinheit 7 sind eingangs- und ausgangsseitig unterschiedliche Bauelemente anbringbar, etwa Gehäusetrichter 20. Weiterhin können zwei oder auch mehr Baueinheiten 7 mit Hilfe von etwa rohrabschnittförmigen Verbindungsstücken (siehe weiter unten) zu längeren Baugruppen zusammenfasst werden. Es können auch Baueinheiten mit unterschiedlichen Reinigungselementen, z.B. Oxidationskatalysatoren und Rußfilter, miteinander kombiniert werden.

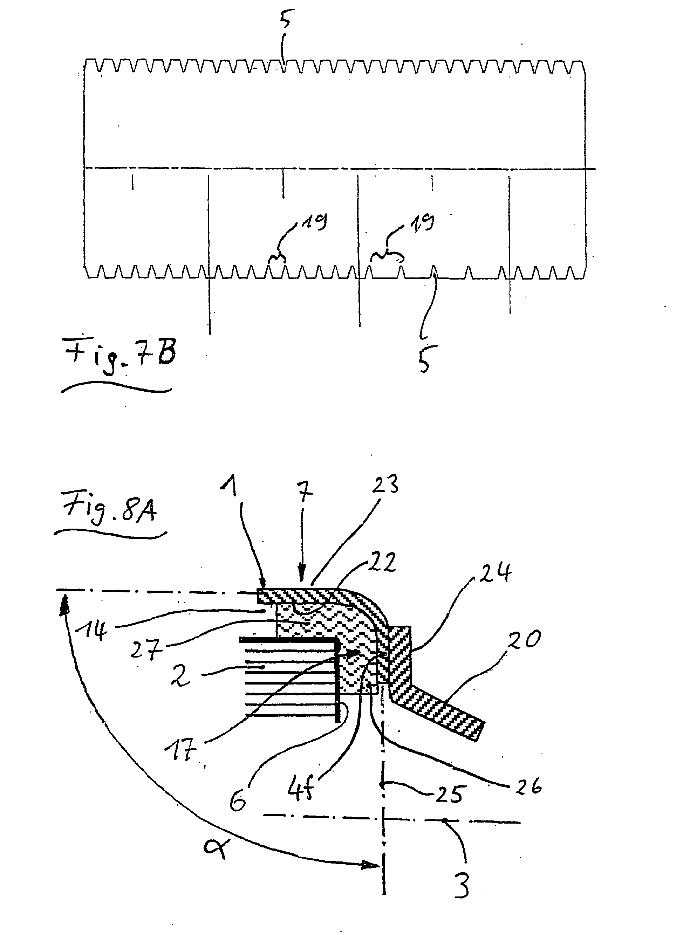

In Fig.2 bis 7 B sind verschiedene Möglichkeiten für die Gestaltung und Anordnung von Haltelementen an einem Gehäuseabschnitt 1 exemplarisch aufgezeigt. Bei dem Beispiel von Fig.2 sind nach innen eingezogene Endbereiche 1a nicht vorhanden, der Gehäuseabschnitt 1 ist vielmehr über seine gesamte Länge zylinderförmig ausgebildet, wobei etwa trapezförmige, sich radial nach innen verjüngende Haltelemente 4a an die Stirnseite des Gehäuseabschnitts 1 angeformt sind. Im Vormontagezustand erstrecken sich die Halteelemente 4 in Axialrichtung. Nach der oben erwähnten plastischen Umformung sind sie radial nach innen gerichtet und überlappen die Stirnseite 6 des Monolithen, wobei sie zumindest mit einem Teil des Überlappungsbereiches 10 mittel oder unmittelbar an der Stirnseite 6 anliegen und diese mit einer den Monolithen axial und radial haltenden Kraft beaufschlagen. Der Gehäuseabschnitt 1 von Fig.2 ist z.B. von einem Blechzuschnitt 13 gebildet, wie er in Fig.7 A,B gezeigt ist. Im Ausgangszustand erstrecken sich die Halteelemente 4 parallel bzw. koaxial zur Mittellängsachse 3 des Monolithen 2 bzw. des Gehäuseabschnitts 1. Die Umformung erfolgt nun derart, dass der Knickbereich im wesentlichen durch die Basis 12 der Halteelemente 4a verläuft. Der zwischen Gehäuse 1 und Monolith 2 vorhandene Spaltraum 14 wird auf diese Weise nur von den Halteelementen 4a überdeckt. Es ist nun denkbar, zumindest im Stirnbereich des Monolithen 2 in den Spaltraum 14 ein Dichtelement, etwa in Form einer Mineralfasermatte anzuordnen, um zu verhindern, dass Abgas unter Umgehung des Monolithen über die Zwischenräume 11 zwischen den Halteelementen 4 in den Spaltraum 14 strömt.

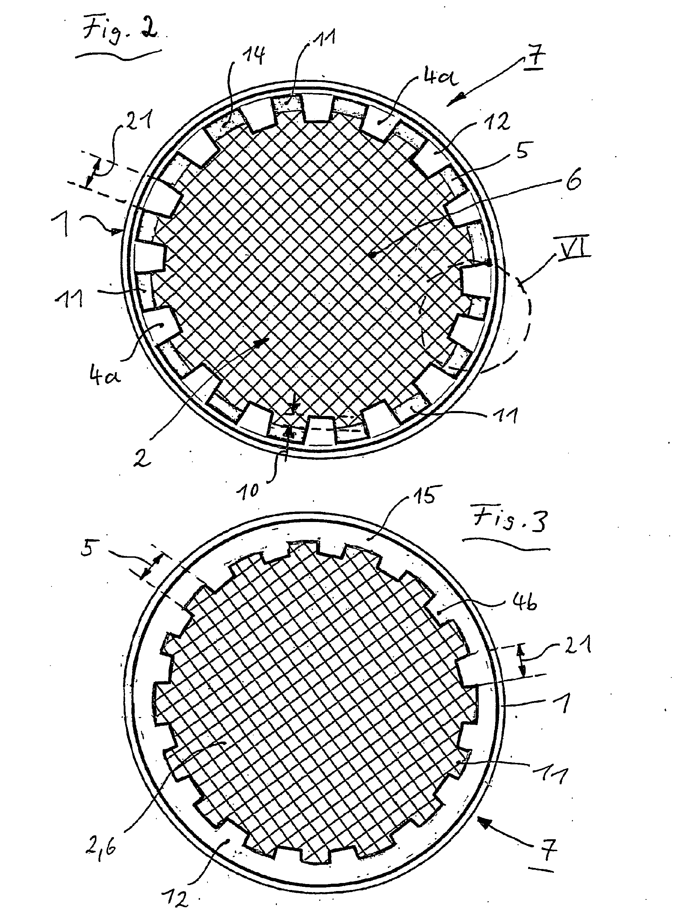

Bei der Ausführungsvariante von Fig.3 sind nicht nur die Halteelemente 4b sondern auch noch ein sich an diese im Ausgangszustand in Axialrichtung anschließender Abdeckbereich 15 (siehe auch Fig.7 A) etwa radial nach innen umgeformt. Der Abdeckbereich 15 überdeckt den Spaltraum 14 zumindest teilweise, wie das in Fig.3 der Fall ist. Er kann aber auch soweit radial nach innen reichen, dass der Spaltraum 14 vollständig verschlossen und ein Einströmen von Abgas verhindert ist.

Die Halteelemente 4 können, wie bereits erwähnt, mittel- oder unmittelbar an der Stirnseite 6 des Monolithen anliegen. Vielfach ist aber die Zwischenlage eines Zwischenelements 17 zweckmäßiger. Ein beispielsweise aus einem Drahtgestrick bestehendes Zwischenelement 17a kann ringförmig ausgebildet und so an der Stirnseite 6 eines Monolithen 2 angeordnet sein, dass es sich bis zur Innenseite des Gehäuseabschnitts 1 erstreckt und dabei mit einem gegebenenfalls vorhandenen Abdeckbereich 15 überlappt. Die Halteelemente 4c stützen sich also nicht direkt an der Stirnseite 6 des Monolithen, sondern an ein Zwischenelement 17 ab.

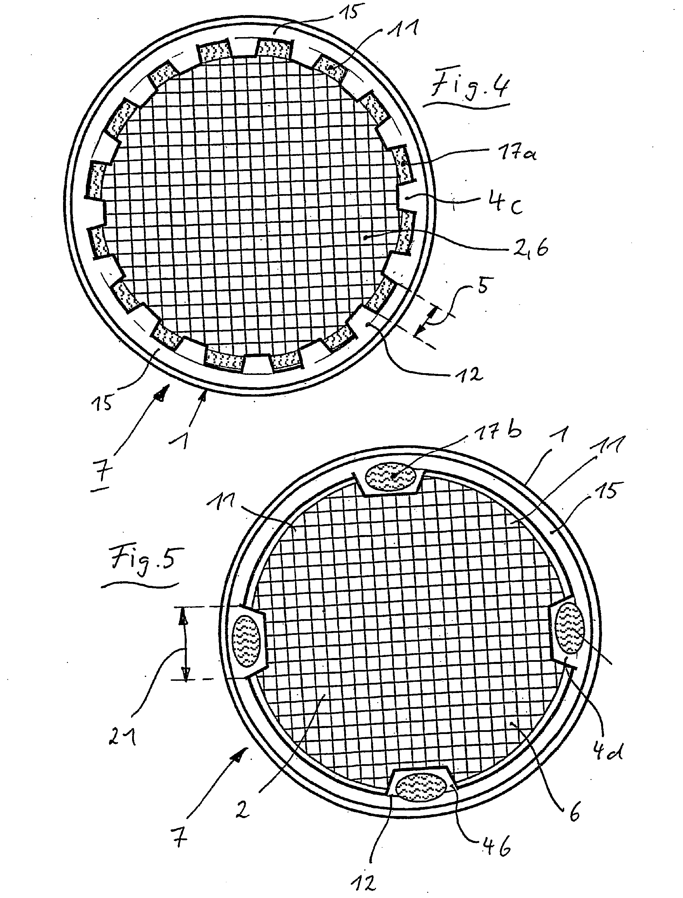

Bei der Ausführungsvariante von Fig.5 sind insgesamt vier gleichmäßig über den Umfang des Gehäuseabschnitts 1 verteilte Halteelemente 4d vorhanden, die ebenfalls an einem Abdeckbereich 15 angeformt sind. Die Halteelemente 4d weisen eine größere Breite als die weiter oben beschriebenen auf. Zwischen einem Halteelement 4d und der Stirnseite 6 eines Monolithen 2 ist jeweils ein einzelnes Zwischenelement 17b angeordnet. Die bei einer Draufsicht auf die Stirnseite einer Baueinheit 7 normalerweise nicht sichtbaren Zwischenelemente 17b sind aus Vereinfachungsgründen in Fig.5 sichtbar dargestellt, so, als seien die Halteelemente 4d durchsichtig. Die bei den oben beschriebenen Ausführungsvarianten von einer Vielzahl von Halteelementen 4a bis 4c auf einen Monolithen 2 ausgeübte Haltekraft wird bei der Ausführungsvariante von Fig.5 durch wesentlich weniger, nämlich durch insgesamt vier Halteelemente 4d aufgebracht. Dementsprechend weisen die Haltelemente 4d eine größere Steifigkeit auf. Dies wird u.a. durch eine entsprechend größere Breite 21 der Halteelemente 4d erreicht.

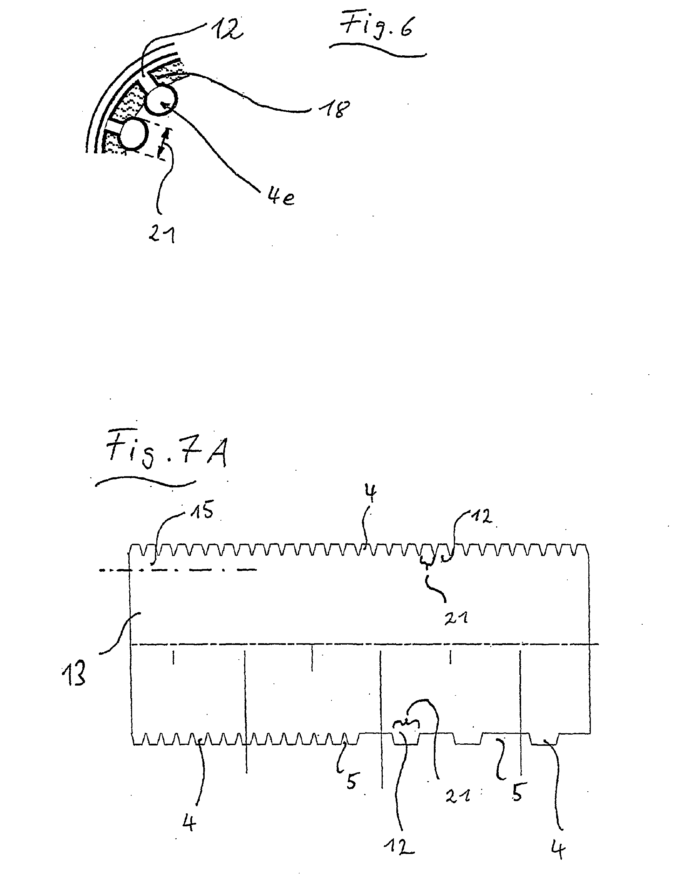

Die Steifigkeit eines Halteelements 4 lässt sich allgemein durch verschiedene Maßnahmen beeinflussen. So kann beispielsweise zwischen dem Freiende und der Basis 12 eines Halteelements 4e eine Einschnürung 18 in Umfangsrichtung vorhanden sein (Fig.6). Eine solche Einschnürung 18 macht ein Halteelement 4e in Axialrichtung elastischer. Die Steifigkeit bzw. die sich daraus ergebende Haltekraft eines Halteelements kann weiterhin durch dessen Blechdicke, durch dessen Breite sowie durch Versteifungselemente etwa in Form von Noppen, Rippen oder Sicken variiert werden. Einfluss auf die Steifigkeit eines Halteelements hat auch der Radius des Gehäusesektors, an dem es angeformt ist. Je kleiner dieser Radius ist, desto größer ist die Steifigkeit eines Halteelements mit einer bestimmten Breite. In Fig.7 A,B sind exemplarisch einige Möglichkeiten angedeutet, wie bei Halteelementen 4 sowohl deren Breite 21 (gemessen an der Basis 12) als auch deren gegenseitige Abstände 5 verändert werden können. Durch die genannten Maßnahmen lässt sich bei einer erfindungsgemäß ausgestalteten Abgasvorrichtung eine gleichmäßige Verteilung der Haltekräfte über den Stirnrandbereich eines Monolithen 2 erreichen.

In Fig.8 A-D sind einige Beispiele dafür gezeigt, wie ein Gehäusetrichter 20 an einer Baueinheit 7 fixiert werden kann. Bei der Ausführungsvariante von Fig.8 A sind die Halteelemente 4f so umgebogen, dass sie ihre Planebene 25 mit der Mittellängsachse 3 einen Winkel α von etwa 90° bilden. In diesen Fällen bilden die Außenseiten der Halteelemente 4f eine sich rechtwinklig zur Mittellängsachse 3 erstreckende Fläche, andie ein Gehäusetrichter 20 mit einem sich radial nach außen erstreckenden Fixierabschnitt 24 montierbar, zum Beispiel anschweißbar ist. Bei der Ausführungsvariante von Fig. 8B erstreckt sich der Fixierabschnitt 24a parallel zur Mittelängsachse 3 und ist an der Außenseite des Gehäuseabschnitts 1 fixiert. Ähnlich verhält es sich bei dem Ausführungsbeispiel nach Fig.8 C. Hier ist lediglich der den Fixierabschnitt 24 aufnehmende Bereich 19 des Gehäuseabschnittes 1 radial nach innen gezogen, so dass die Außenfläche des Fixierabschnitts 24 a mit der Außenfläche des Gehäuseabschnittes 1 etwa fluchtet.

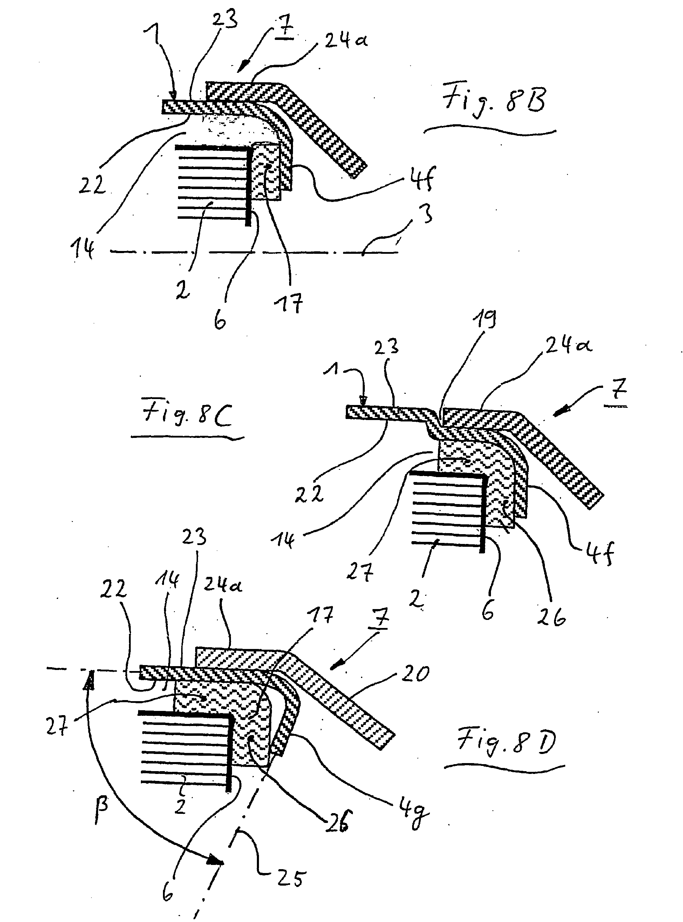

Bei der Ausführungsvariante von Fig.8 D ist ein Gehäusetrichter 20 auf die gleiche Art fixiert wie bei der Ausführungsvariante von Fig.8 B. Unterschiedlich ist jedoch, dass die Planebene 25 der Halteelemente 4g mit der Innenwand 22 des den Monolithen aufnehmenden Lagerbereichs 23 des Gehäuseabschnitts 1 einen zur Stirnseite 6 des Monolithen 2 sich öffnenden Winkel β < 90° bildet. In diesem Fall liegt das Halteelement 4g nur mit seinem Freiende an der Stirnseite 6 bzw. einem Zwischenelement 17 an. Eine solche Situation kann auch dadurch geschaffen werden, dass ein Halteelement nicht planeben, sondern gekrümmt ist, wie etwa in Fig.12 gezeigt.

Wie z.B. aus Fig.8 A ersichtlich ist, kann ein Zwischenelement 17 einen sich ein Stück weit in den Spaltraum 14 hinein erstreckenden Axialabschnitt 27 aufweisen. Unabhängig davon, ob ein Zwischenelement 17 als Ring ausgebildet ist, oder ob es sich um einzelne in Umfangsrichtung des Monolithen verteilte Zwischenelemente handelt, etwa wie im Falle von Fig.5, kann auf diese Weise eine sichere axiale und radiale Lagerung eines Monolithen 2 erreicht werden, ohne dass zusätzlich in dem Spaltraum 14 eine Lagerungsmatte positioniert wird. Denkbar ist auch, dass dem Zwischenelement 17 ein Axialabschnitt 27 fehlt, wie das bei der Ausführungsvariante von Fig.8 B der Fall ist. Eine solche Ausgestaltung bietet sich an, wenn im Spaltraum 14 eine Lagerungsmatte vorhanden ist, oder wenn trotz des Fehlens einer solchen eine ausreichende axiale und radiale Fixierung des Monolithen 2 allein durch die von den Halteelementen 4 ausgeübten Haltekräfte gewährleistet ist.

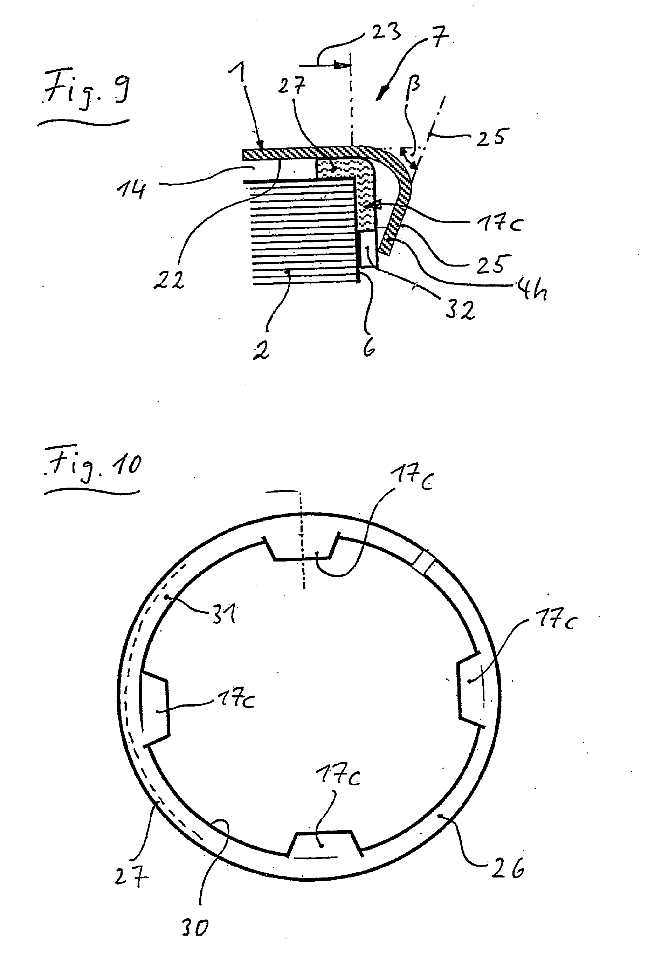

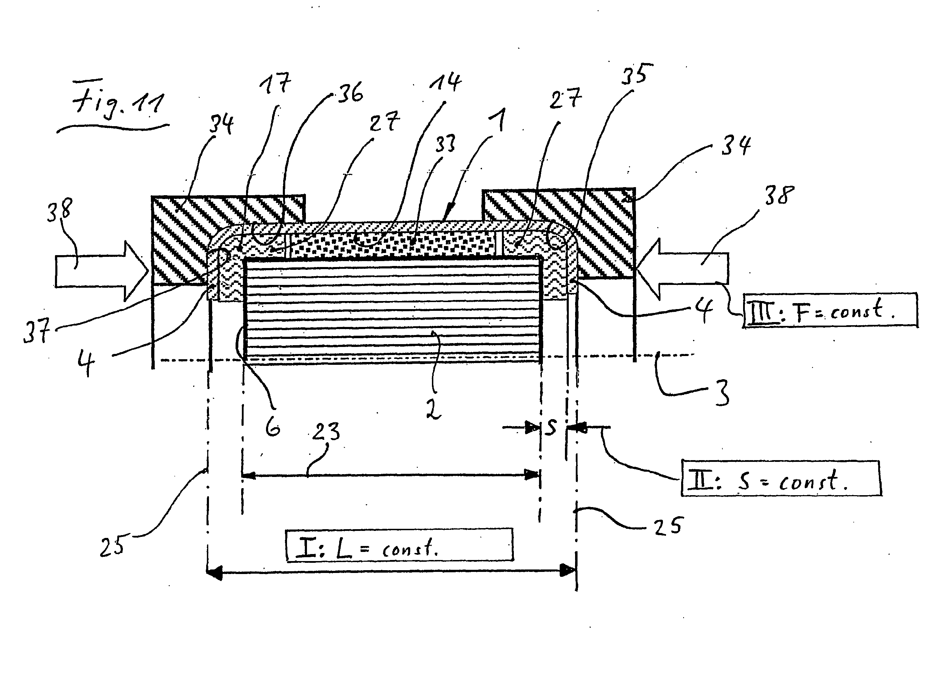

In Fig.9 und 10 ist eine Ausführungsvariante gezeigt, bei der ein ringförmiger, sich in den in den Spaltraum 14 hineinerstreckender Axialabschnitt 27a vorhanden ist, der Halteelemente 17c trägt. An die vom Spaltraum 14 weg weisende Stirnseite des Axialabschnitts 27a ist ein den Spaltraum 14 abdeckender Ringbereich 31 angeformt, von dessen Innenrand 30 Zwischenelemente 17c radial nach innen abstehen. Die Planebenen der Halteelemente 17c schließen mit der Innenwand 22 des Gehäuseabschnitts 1 einen Winkel β < 90° ein. Sie liegen deshalb lediglich mit ihrem Freiende an den Zwischenelementen 17c an. Die Halteelemente 17c können auch anders geformt bzw. ausgerichtet sein.

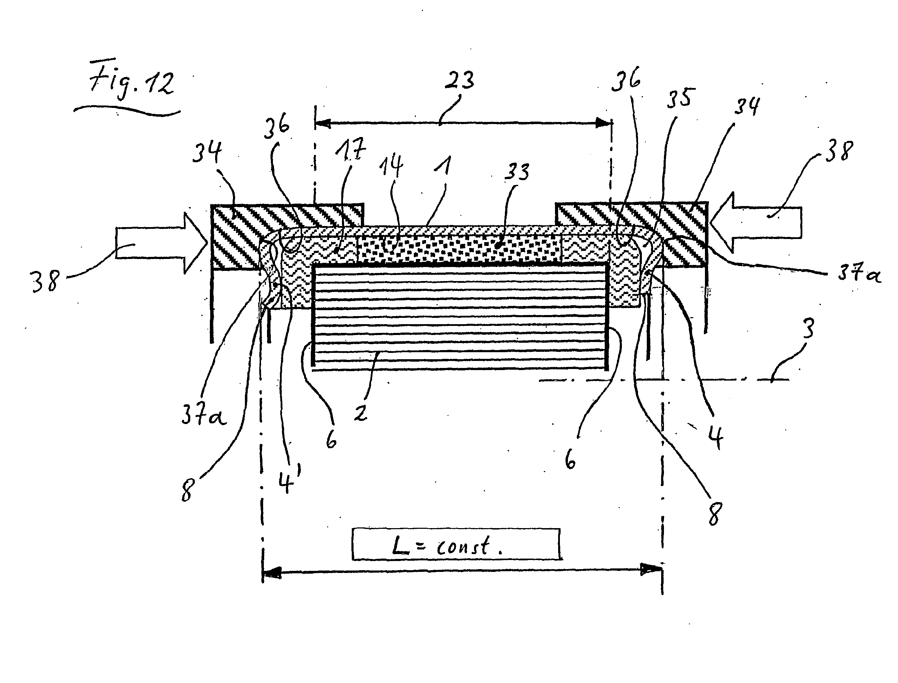

Im Folgenden wird ein Verfahren zur Herstellung einer Baueinheit 7 des ersten Ausführungsbeispiels näher erläutert (Fig.11,12): Es wird ein Gehäuseabschnitt 1 bereit gestellt, der beispielsweise aus Blechzuschnitten 13 (Fig.7) gebildet ist. Die Halteelemente 4 sind durch Einschnitte in der Stirnseite des beispielsweise kreiszylinderförmigen Gehäuseabschnitts 1 gebildet. Die Halteelemente 4 erstrecken sich somit im Ausgangszustand parallel zur Mittellängsachse 3 bzw. koaxial zu dieser. In einen derartigen Gehäuseabschnitt 1 wird ein Monolith 2 eingeschoben, wobei an dessen Stirnseiten einzelne Zwischenelemente 17, ein ringförmig ausgebildetes Zwischenelement 17a oder eine Anordnung gem. Fig.10 angeordnet wird. In dem Spaltraum 14 ist eine Lagermatte 8, beispielsweise eine nicht quellende Mineralfasermatte angeordnet. Eine Lagermatte 8 kann aber gegebenenfalls auch weggelassen werden. Ein derart vorkonfektionierter Gehäuseabschnitt 1 wird zwischen zwei axial aufeinander zu bewegliche Formhälften 34 eines Werkzeugs gebracht. Eine Formhälfte 34 umfasst eine Ausnehmung 35, mit einem ersten und zweiten Wandabschnitt 36,37. Der erste Wandabschnitt 36 ist komplementär zur späteren Außenkontur der Enden des Gehäuseabschnitts 1 ausgebildet. Der zweite Wandabschnitt 37 verläuft bei der Verfahrensvariante gemäß Fig.11 etwa rechtwinklig zum ersten Wandabschnitt 36. Die Halteelemente 4 stehen zunächst im nicht umgebogenem Zustand mit ihren Stirnseiten auf einem Wandabschnitt 37 auf. Wenn die beiden Formhälften 34 in Richtung der Pfeile 38 aufeinander zu bewegt und mit einer Kraft beaufschlagt werden, biegen sich die Halteelemente 4 radial nach innen um, wobei ihre Planebene 25 nach erfolgter Umformung etwa rechtwinklig zur Mittellängsachse 3 verläuft. Die Zwischenelemente 17 sind elastisch, d.h. sie sind in Axialrichtung komprimierbar. Vorzugsweise handelt es sich um einzelne Drahtgestrickelemente oder um jeweils einen einer Stirnseite zugeordneten Drahtgestrickring.

Bei einer ersten Verfahrensvariante I (Fig.11) wird zwischen den beiden Formhälften 34 ein konstanter Abstand zwischen den Wandbereichen 37 eingehalten. Nach der Umformung der Halteelemente 4 haben Gehäuseabschnitte 1 somit stets die gleiche Länge L. Längentoleranzen des Monolithen 2 und eines Zwischenelements 17 werden durch elastisch in Axialrichtung verbiegbare Halteelemente 4 und durch axial komprimierbare elastische Zwischenelemente 17 ausgeglichen. Dabei ergeben sich je nach Toleranzlage geringfügig unterschiedliche von den Halteelementen 4 ausgeübte Haltekräfte. Bei einer zweiten Verfahrensvariante II werden die Formhälften 34 einander soweit genähert, dass sich für den zwischen einer Stirnseite 6 und einem Halteelement 4 vorhandenen Spalt S ein konstanter Wert ergibt. Diese Verfahrensvariante setzt die Kenntnis der Länge des individuellen Monolithen 2 voraus. Die Halteelemente 4 müssen in diesem Fall lediglich Toleranzen der Zwischenelemente 17 ausgleichen. Bei einer dritten Verfahrensvariante III schließlich werden die beiden Formhälften 34 mit einer konstanten Kraft F aufeinander zu bewegt. Dabei werden unterschiedliche Kompressionskurven von Zwischenelementen, etwa von solchen aus Drahtgestrick, kompensiert und es stellen sich unterschiedlich große Spalte S zwischen Monolith 2 und Halteelement 4 ein.

Eine Möglichkeit, unterschiedliche Monolithlängen bzw. unterschiedliche Zwischenelement-Dicken (in Axialrichtung gesehen) zu kompensieren, bietet das in Fig.12 angedeutete Verfahren. Die Ausnehmung 35 in den Formhälften 24 ist nach Art einer Hohlkehle ausgebildet, was insbesondere dadurch erreicht wird, dass der Wandbereich 37a nicht in einer Radialebene, sondern etwa in einer sich zur Stirnfläche 6 des Monolithen hin verengenden Konusfläche bildet. Die beiden Formhälften 34 werden auf einen konstanten Abstand zusammengefahren, wobei hier der Abstand l zwischen den am weitesten axial voneinander entfernten Stellen der Wandbereiche 37a gemeint ist. Dementsprechend weist ein Gehäuseabschnitt 1 nach dem Umformen unabhängig von den Toleranzen der Zwischenelemente 17 und des Monolithen 2 eine konstante Länge L auf. Durch die gewölbte Ausgestaltung der Wandbereiche 37a wird ein Halteelement 4 so umgeformt, dass es sich radial nach innen umbiegt, wobei sein Freiende auf die Außenseite eines Zwischenelements 17 bzw. auf die Stirnseite 6 eines Monolithen 2 auftrifft und diese mit einer Axialkraft beaufschlagt. Je nach Toleranzlage wird das Halteelement 4 entgegen der Bewegungsrichtung der Formhälften 34 (Pfeile 38) elastisch von der Stirnseite 6 des Monolithen 2 weg gedrängt. Bei einem längeren Monolithen 2 ist diese elastische Verformung stärker ausgeprägt (Fig.12 linke Seite) als bei einem kürzeren Monolithen 2 (Fig.12 rechte Seite). Bei relativ langen Monolithen 2 kann ein Halteelement 4 derart elastisch umgeformt werden, dass es ein im Querschnitt etwa s-förmiges Profil aufweist.

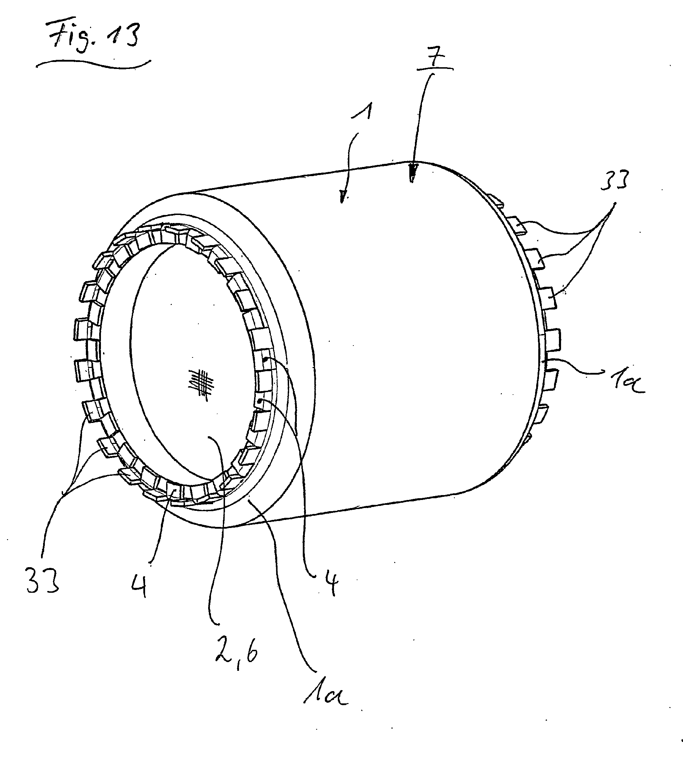

In Fig.13 ist eine Ausführungsvariante eines Gehäuseabschnittes 1 gezeigt, bei dem sich Haltelemente 4 mit in Axialrichtung abstehenden Fixierlaschen 33 abwechseln. Die Fixierlaschen 33 dienen zur Fixierung eines Gehäusetrichters (in Fig.12 nicht dargestellt). Der Gehäusetrichter wird dazu mit einem zylindrischen Endabschnitt auf die Fixierlaschen 33 aufgesteckt, beispielsweise so, dass die Innenfläche des Endabschnitts an der Außenfläche der Fixierlaschen 33 anliegt.

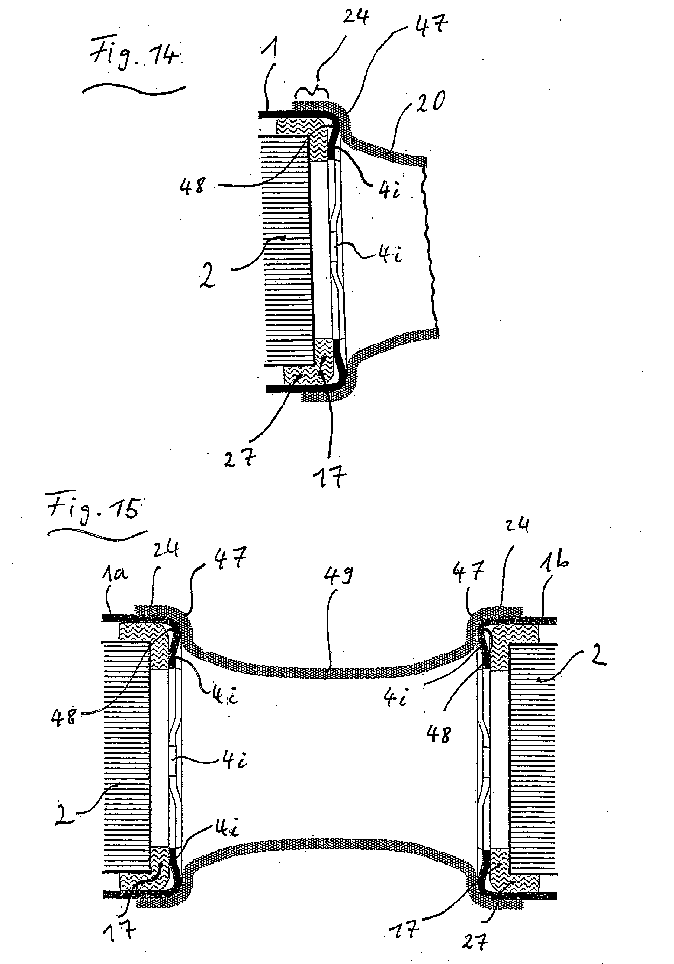

In Fig. 14 ist eine Ausführungsvariante des ersten Ausführungsbeispiels gezeigt, bei dem vier in Umfangsrichtung gleichmäßig verteilte Haltelemente 4i etwa entsprechend Fig.8 D ausgeformt sind. An die Außenseite des Gehäuseabschnitts 1 ist ein Gehäusetrichter 20 mit einem zylinderförmigen Fixierabschnitt 24 angesetzt. An diesen schließt sich ein radial nach innen gekrümmter Bereich 47 an, dessen dem Monolithen 2 zugewandte Innenseite komplementär zu dem gekrümmten Bereich 48 der Haltelemente 4i ausgeformt ist. Durch diese Ausgestaltung wird eine mechanische Stabilisierung der Haltelemente 4i erreicht. Je nachdem, wie weit in Radialrichtung gesehen der Bereich 47 am Bereich 48 anliegt, kann eine mehr oder weniger starke Beeinflussung der Steifigkeit der Halteelemente 4i erreicht werden.

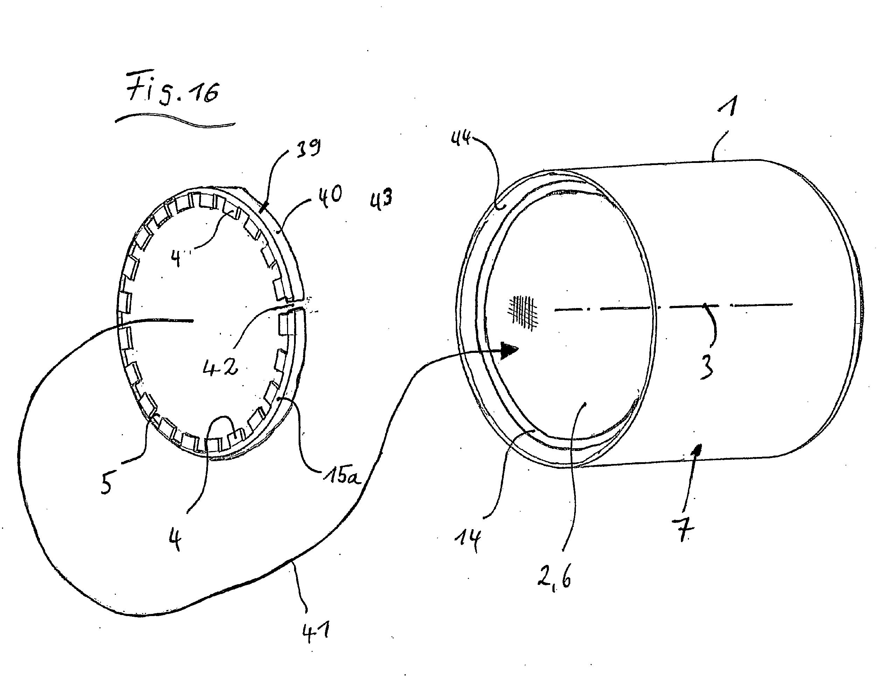

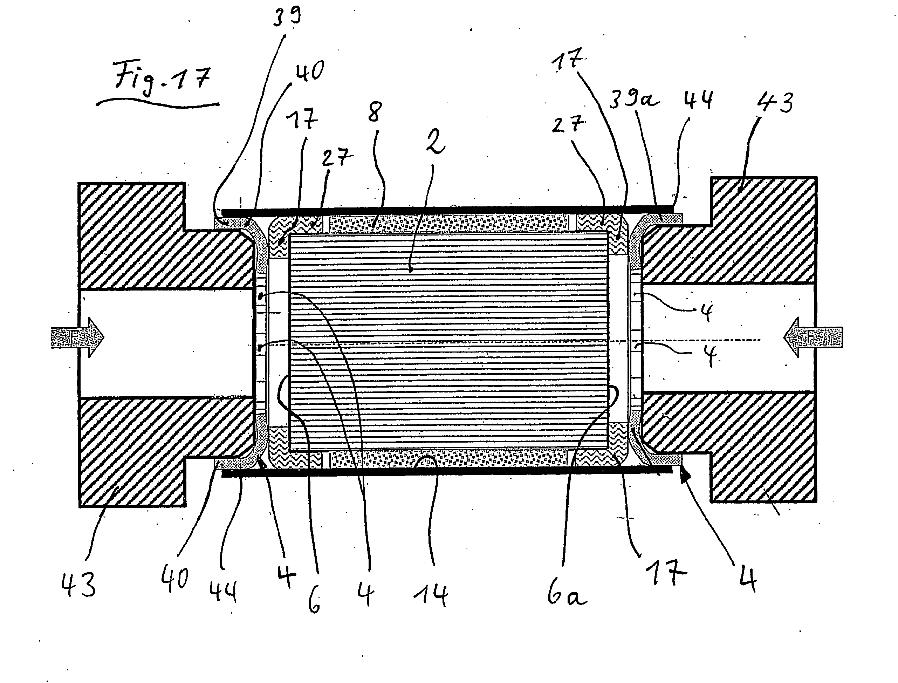

Bei einer weiteren Variante des ersten Ausführungsbeispiels, sind zwei Gehäuseabschnitte 1a,1b, miteinander über ein Zwischenrohrstück 49 miteinander verbunden (Fig.15). Die Endabschnitte des Zwischenrohrstückes 49 sind entsprechend dem Endabschnitt des Gehäusetrichters 20 in Fig.17 ausgestaltet, weisen also einen radial nach innen gekrümmten Bereich 47 auf. Dieser liegt am komplementär gekrümmten Bereich 48 der Halteelemente 4i an.

In Fig.16 ist ein zweites Ausführungsbeispiel gezeigt, bei dem die Halteelemente 4 nicht einstückig mit dem Gehäuseabschnitt 1 verbunden, sondern an einem separaten Ring 39 angeformt sind. Der Ring 39 hat ein etwa L-förmiges Querschnittsprofil, dessen einer Schenkel eine koaxial zur Mittellängsachse 3 des Gehäuses 1 verlaufenden Schürze 40 ist, und dessen anderer Schenkel quer dazu bzw. in einer Radialebene verläuft und einen den Spaltraum 14 abschießenden Abdeckbereich 15a bildet. Vom Innenrand des Abdeckbereichs 15a springen die Halteelemente 4 etwa radial nach innen vor. Hinsichtlich der Ausgestaltung und Steifigkeit der Halteelemente gilt das weiter oben gesagte analog. Insbesondere können die Halteelemente sich etwa rechtwinklig zur Mittellängsachse 3 erstrecken oder eine gewölbte Form aufweisen, etwa wie in Fig. 12. Der Ring 39, der in Fig.16 separat gezeichnet ist, wird in Richtung des Pfeils 43 um 180° gedreht auf den Gehäuseabschnitt 1 aufgeschoben, wobei sich im Montagezustand die Schürze 40 von der Stirnseite 6 weg erstreckt. Im Spaltraum 14 kann, wie bei den weiter oben beschriebenen Beispielen auch, eine Lagermatte, eine Isoliermatte oder auch gar keine Matte angeordnet sein. In jede Seite des Gehäuseabschnitts 1 wird ein Ring 39,39a (Fig.17), der geschlossen oder offen (Schlitz 42) sein kann, mit den Halteelementen 4 voraus, vorzugsweise unter Zwischenlage eines Zwischenelements 17, eingesetzt.

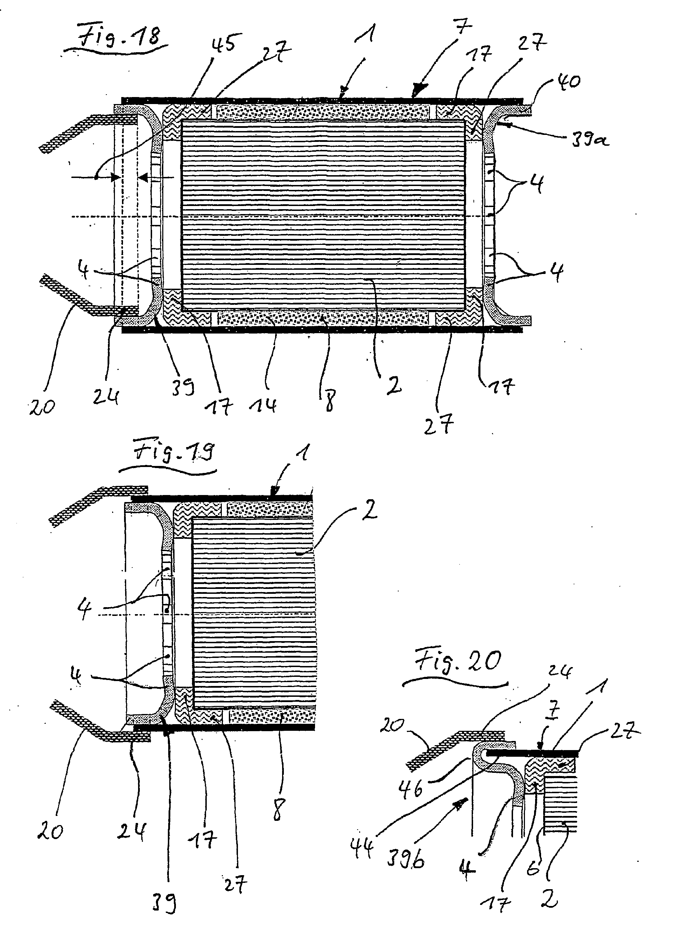

Zur weiteren Montage wird dann wie folgt vorgegangen: Die beiden Ringe 39,39a der jeweiligen Stirnseite 6,6a des Monolithen 2 werden unter axialer Kompression des Zwischenelements 17 mit einer Axialkraft F beaufschlagt. Dies kann, wie in Fig.17 gezeigt, mit Hilfe zweier Stempel 43 erfolgen, welche die Ringe 39, 39a axial beaufschlagen. Denkbar ist auch, dass einer der Stempel als ortsfeste Gegenhaltung dient und die Axialkraft vom anderen Stempel aufgebracht wird. Die Kraftbeaufschlagung der Ringe 39, 39a erfolgt so lange, bis entweder eine vorgegebene axiale Haltekraft oder ein vorgegebener Abstand zwischen den Ringen 39,39a erreicht ist. Dann werden die Ringe 39,39a beispielsweise durch eine Punktschweißung an der Innenfläche der den Monolithen 2 stirnseitig überragenden Gehäuseenden 44 fixiert. Die sich in Axialrichtung erstreckenden Schürzen 40 der Ringe 39,39a weisen eine derartige Länge auf, dass ein Gehäusetrichter 20 problemlos an ihrer Innenseite fixiert, vorzugsweise angeschweißt werden kann (Fig. 18). Die Länge der Schürze 40 ist außerdem so bemessen, dass ein gewisses Axialspiel 45 zur Axialpositionierung eines Gehäusetrichters 20 bzw. zur Einstellung der Gesamtlänge einer mit Gehäusetrichtern 20 komplettierten Abgasreinigungsvorrichtung vorhanden ist. Ein Gehäusetrichter 20 kann auch auf der Außenseite eines Ringes 39,39a fixiert werden, sofern dessen Schürze 40 weit genug über die jeweiligen Gehäuseenden 44 hinausragt (nicht dargestellt). Schließlich kann ein Gehäusetrichter 20 kann mit seinem Fixierabschnitt 24 an der Außenseite des Gehäuseabschnitts 1 fixiert werden, wie dies in Fig.19 gezeigt ist. Denkbar ist, dass nur einer der beiden Ringe 39,39a Haltelemente 4 aufweist, der andere Ring dagegen anstelle der Halteelemente einen in Umfangsrichtung zusammenhängenden Schenkel aufweist, an dem sich der Monolith 2 abstützt (nicht dargestellt).

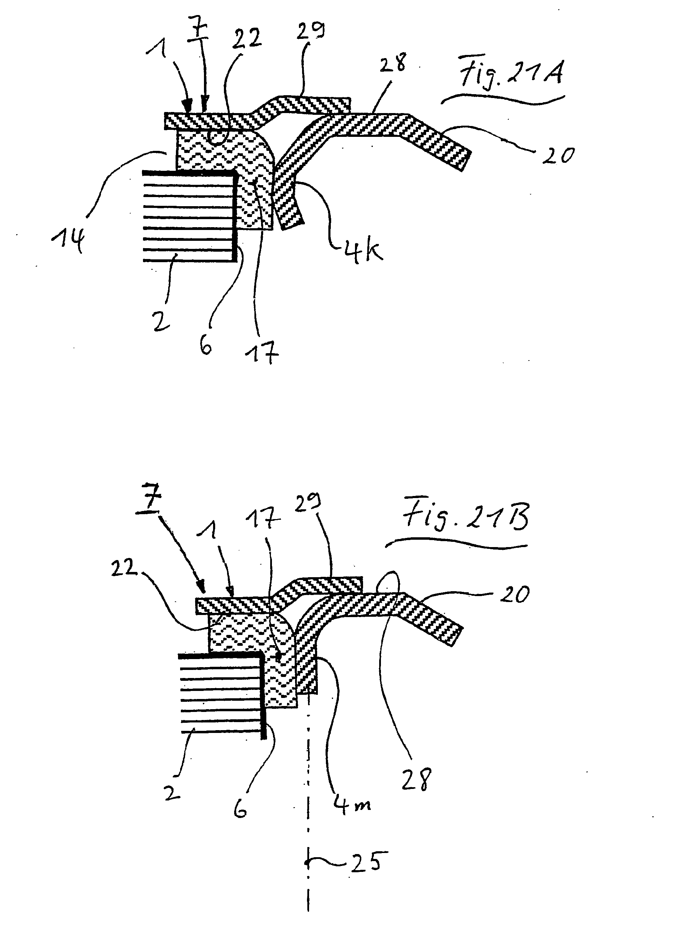

In Fig.20 ist eine Ausführungsvariante gezeigt, bei welcher ein Halteelemente 4 tragender Ring 39b an der Außenseite des Gehäuseabschnitts 1 fixiert ist. Der Ring 39b ist im wesentlichen von einem ringförmigen U-Profil 46 gebildet, an dessen innenliegendem Schenkel Halteelemente 4 angeformt sind. Das U-Profil 46 ist über das Gehäuseende 44 des Gehäuseabschnitts 1 gesteckt und mit der Innenseite des außenliegenden Schenkels an der Außenseite des Gehäuseendes 44 fixiert, beispielsweise angeschweißt. Ein Gehäusetrichter 20 umfasst mit seinem Fixierabschnitt 24 das U-Profil 46 und ist an dessen äußeren Schenkel fixiert.

In Fig.21 A,B ist ein drittes Ausführungsbeispiel gezeigt, bei dem die Halteelemente 4k bzw. 4m an einem Gehäusetrichter 20 stirnseitig angeformt sind. Wie auch bei den oben beschriebenen Ausführungsbeispielen auch, kann sich die Planebene 25 eines Halteelements 4k rechtwinklig zur Mittellängsachse 3 erstrecken. Denkbar ist aber auch, wie in Fig.21 A gezeigt, dass die Haltelemente 41 gekrümmt sind, wobei der konvexe Teil der Krümmung dem Monolithen 2 zugewandt ist. Die Haltelemente 4k, 4m können ebenfalls aus einer ursprünglichen, sich axial erstreckenden Ausrichtung durch eine plastische Umformung radial nach innen umgebogen werden. Hinsichtlich der Ausgestaltung der Haltelemente 4k, 4m und der Beeinflussung von deren Steifigkeit bzw. Federwirkung gilt das weiter oben gesagte analog. Die Gehäusetrichter 20 weisen einen etwa zylinderförmigen Endabschnitt 28 auf an dessen Stirnseite die Halteelemente 4k, 41 angeformt sind. Der Endabschnitt 28 ist in einem die Stirnseite 6 des Monolithen 2 axial überragenden, beispielsweise aufgeweiteten Endabschnitt 29 des Gehäuseabschnittes 1 eingesteckt. Zur Montage werden die Gehäusetrichter mit einer Axialkraft mit ihren Halteelementen 4k, 4m gegen die Stirnseiten 6 bzw. gegen die Zwischenelemente 17 gedrückt und am Gehäuseabschnitt fixiert, beispielsweise angeschweißt, wenn eine vorgegebene Axialkraft oder ein vorgegebener Axialabstand zwischen den Gehäusetrichtern 20 erreicht ist.

### Bezugszeichenliste

1 Gehäuseabschnitt
2 Monolith
3 Mittellängsachse
4 Haltelement
5 Abstand
6 Stirnseite
7 Baueinheit
8 Lagermatte
10 Überlappungsbereich
11 Zwischenraum
12 Basis
13 Blechzuschnitt
14 Spaltraum
15 Abdeckbereich
16 Flansch
17 Zwischenelement
18 Einschnürung
19 Bereich
20 Gehäusetrichter
21 Breite
22 Innenwand
23 Lagerbereich
24 Fixierabschnitt
25 Planebene
26 Stirnseitenbereich
27 Axialabschnitt
28 Endabschnitt
29 Endabschnitt
30 Innenrand
31 Ringbereich
32 Lasche
34 Formhälfte
35 Ausnehmung
36 Wandbereich
37 Wandbereich
38 Pfeil
39 Ring
40 Schürze
41 Pfeil
42 Schlitz.
43 Stempel
44 Gehäuseende
45 Axialspiel
46 U-Profil
47 Bereich
48 Bereich
49 Zwischenrohrstück

## Patentansprüche

1. Abgasreinigungsvorrichtung für Kraftfahrzeuge mit einem Gehäuse, an das eingangs- und ausgangsseitig Gehäusetrichter fixierbar sind, einem in dem Gehäuse gelagerten, eine vordere und eine hintere, sich jeweils quer zur Mittellängsachse (3) des Gehäuses erstreckende Stirnseite (6) aufweisenden Monolithen (2) , und einem.zwischen Monolith (2) und einem diesen umfassenden Gehäuseabschnitt (1) vorhandenen Spaltraum (14),
**dadurch gekennzeichnet,**
**dass** sich der Monolith (2) zumindest mit einer Stirnseite (6) an einzelnen am Gehäuse fixierten Halteelementen (4) mittel- oder unmittelbar abstützt, welche sich etwa radial nach innen erstrecken und die Stirnseite (6) überlappen.

2. Abgasreinigungsvorrichtung nach Anspruch 1,
**dadurch gekennzeichnet,**
**dass** zwischen den Halteelementen (4) und einer Stirnseite (6) ein Zwischenelement (17) angeordnet ist.

3. Abgasreinigungsvorrichtung nach Anspruch 2,
**gekennzeichnet durch**
ein elastisch verformbares Zwischenelement (17).

4. Abgasreinigungsvorrichtung nach Anspruch 3,
**dadurch gekennzeichnet,**
**dass** ein Zwischenelement (17) aus einem Drahtgestrick besteht.

5. Abgasreinigungsvorrichtung nach einem der Ansprüche 2 bis 4,
**dadurch gekennzeichnet,**
**dass** die Zwischenelemente (17) jeweils einen sich in den Spaltraum (14) axial hinein erstreckenden Axialabschnitt (27) aufweisen.

6. Abgasreinigungsvorrichtung nach einem der Ansprüche 2 bis 4,
**gekennzeichnet durch**
einen als Ring ausgebildeten Axialabschnitt (27), der ein oder mehrere Zwischenelemente (17c) trägt.

7. Abgasreinigungsvorrichtung nach einem der Ansprüche 1 bis 6,
**dadurch gekennzeichnet,**
**dass** die Halteelemente (17) am Innenrand eines als Ringflansch ausgebildeten, sich mit seiner Planeebene quer zur Mittellängsachse (3) verlaufenden Abdeckbereichs (15) angeformt sind, der den Spaltraum (14) zumindest teilweise verschließt.

8. Abgasreinigungsvorrichtung nach einem der Ansprüche 1 bis 7
**dadurch gekennzeichnet,**
**dass** die Halteelemente (4) so gestaltet sind, dass sie in Axialrichtung eine Federwirkung aufweisen.

9. Abgasreinigungsvorrichtung nach Anspruch 8,
**dadurch gekennzeichnet,**
**dass** einer Stirnseite (6) mehrere Halteelemente (4) mit unterschiedlich starker Federwirkung zugeordnet sind.

10. Abgasreinigungsvorrichtung nach Anspruch 8 oder 9,
**dadurch gekennzeichnet,**
**dass** ein Halteelement (4) eine zwischen seinem Freiende (8) und seiner Basis (12) angeordnete Einschnürung (18) in Umfangsrichtung aufweist.

11. Abgasreinigungsvorrichtung nach einem der Ansprüche 1 bis 10,
**dadurch gekennzeichnet,**
**dass** die Halteelemente (4) unterschiedliche Abstände (5) zu einander aufweisen.

12. Abgasreinigungsvorrichtung nach einem der Ansprüche 1 bis 11,
**dadurch gekennzeichnet,**
**dass** die Halteelemente (4) mittel- oder unmittelbar an der Stirnseite des den Monolithen (2) umfassenden Gehäuseabschnitts (1) angeformt sind.

13. Abgasreinigungsvorrichtung nach einem der Ansprüche 1 bis 12,
**dadurch gekennzeichnet,**
**dass** die Halteelemente (4) an einem an der Eingangs- bzw. Ausgangsseite des Gehäuseabschnitts (1) angebrachten Gehäusetrichter (20) fixiert sind.

14. Abgasreinigungsvorrichtung nach Anspruch 13
**dadurch gekennzeichnet,**
**dass** der Gehäusetrichter (20) mit einem Endabschnitt (28) in einem die Stirnseite (6) des Monolithen überragenden Endabschnitt (29) des Gehäuseabschnitts (1) axial fixiert einliegt, wobei die Halteelemente (4k, 41) stirnseitig an den Endabschnitt (28) angeformt sind.

15. Abgasreinigungsvorrichtung nach einem der Ansprüche 1 bis 14,
**dadurch gekennzeichnet,**
**dass** die Halteelemente (4) Teil eines als separates Teil ausgebildeten Rings (39) sind, welcher an der Innen- oder Außenseite des Gehäuseabschnitts (1) fixiert ist.

16. Abgasreinigungsvorrichtung nach Anspruch 15,
**dadurch gekennzeichnet,**
**dass** der Ring (39) eine sich axial erstreckende Schürze (40) aufweist, deren Außenseite mit der Innenseite des Gehäuseabschnitts (1) verbunden ist.

## Claims

1. Exhaust gas purification device for motor vehicles with a housing, which can be fixed to the housing funnel on the inlet side and the outlet side, a monolith (2) mounted in the housing and having a front and rear face side (6) extending in each case transversely to the mid-axis (3) of the housing, and a gap space (14) located between the monolith (2) and a housing section (1) surrounding this, **characterised in that** the monolith (2) is supported at least by one face side (6) indirectly or directly by retaining elements (4) fixed individually to the housing, which extend approximately radially inwards and overlap the face side (6).

2. Exhaust gas purification device according to Claim 1,
**characterised in that** an intermediate element (17) is arranged between the retaining elements (4) and a face side (6).

3. Exhaust gas purification device according to Claim 2,
**characterised by** an elastically deformable intermediate element (17).

4. Exhaust gas purification device according to Claim 3,
**characterised in that** an intermediate element (17) consists of a wire mesh.

5. Exhaust gas purification device according to any one of Claims 2 to 4, **characterised in that** the intermediate elements (17) in each case have an axial section (27) extending axially into the gap space (14).

6. Exhaust gas purification device according to any one of Claims 2 to 4, **characterised by** an axial section (27) formed as a ring, which carries one or more intermediate elements (17c).

7. Exhaust gas purification device according to any one of Claims 1 to 6, **characterised in that** the retaining elements (17) are formed at the inner edge of a cover area (15) designed as a ring flange with its plane level running transverse to the middle longitudinal axis (3), which at least partially closes off the gap space (14).

8. Exhaust gas purification device according to any one of Claims 1 to 7, **characterised in that** the retaining elements (4) are designed in such a way that they exert a spring effect in the axial direction.

9. Exhaust gas purification device according to Claim 8,
**characterised in that** a plurality of retaining elements (4) is allocated to one face side (6) with differing strength of spring effect.

10. Exhaust gas purification device according to Claim 8 or 9, **characterised in that** one retaining element (4) has a tapering area (18) in the circumferential direction arranged between its free end (8) and its base (12).

11. Exhaust gas purification device according to any one of Claims 1 to 10, **characterised in that** the retaining elements (4) have different distance intervals (5) between one another.

12. Exhaust gas purification device according to any one of Claims 1 to 11, **characterised in that** the retaining elements (4) are formed indirectly or directly at the face side of the housing section (1) surrounding the monolith (2).

13. Exhaust gas purification device according to any one of Claims 1 to 12, **characterised in that** the retaining elements (4) are fixed to a housing funnel (20) located at the inlet or outlet side of the housing section (1).

14. Exhaust gas purification device according to Claim 13, **characterised in that** the housing funnel (20) is located fixed axially with an end section (28) in an end section (29) of the housing section (1) projecting over the face side (6) of the monolith, wherein the retaining elements (4k, 41) are formed on the face side at the end section (28).

15. Exhaust gas purification device according to any one of Claims 1 to 14, **characterised in that** the retaining elements (4) are part of a ring (39) designed as a separate part, which is fixed to the inner or outer side of the housing section (1).

16. Exhaust gas purification device according to Claim 15, **characterised in that** the ring (39) has an apron (40) extending axially, of which the outer side is connected to the inner side of the housing section (1).

## Revendications

1. Dispositif d'épuration de gaz d'échappement de véhicules automobiles, comprenant une enveloppe sur laquelle peuvent être immobilisés des entonnoirs du côté de l'entrée et du côté de la sortie, un monolithe (2) monté dans l'enveloppe et ayant un côté (6) frontal avant et un côté (6) frontal arrière s'étendant, respectivement, transversalement à l'axe (3) longitudinal médian de l'enveloppe et un espace (14) de séparation présent entre le monolithe (2) et une partie (1) de l'enveloppe qui entoure le monolithe,
**caractérisé**
**en ce que** le monolithe (2) s'appuie directement ou indirectement au moins par un côté (6) frontal sur des éléments (4) individuels de maintien, qui sont immobilisés sur l'enveloppe, qui s'étendent à peu près radialement vers l'intérieur et qui chevauchent le côté (6) frontal.

2. Dispositif d'épuration de gaz d'échappement suivant la revendication 1,
**caractérisé**
**en ce qu'**un élément (17) intermédiaire est interposé entre les éléments (4) de maintien et un côté (6) frontal.

3. Dispositif d'épuration de gaz d'échappement suivant la revendication 2,
**caractérisé**
**par** un élément (17) intermédiaire déformable élastiquement.

4. Dispositif d'épuration de gaz d'échappement suivant la revendication 3,
**caractérisé**
**en ce qu'**un élément (17) intermédiaire est en une toile métallique.

5. Dispositif d'épuration de gaz d'échappement suivant l'une des revendications 2 à 4,
**caractérisé**
**en ce que** les éléments (17) intermédiaires ont, respectivement, une partie (27) axiale s'étendant axialement dans l'espace (14) de séparation.

6. Dispositif d'épuration de gaz d'échappement suivant l'une des revendications 2 à 4,
**caractérisé**
**par** une partie (27) axiale qui est constituée en anneau et qui porte un ou plusieurs éléments (17c) intermédiaires.

7. Dispositif d'épuration de gaz d'échappement suivant l'une des revendications 1 à 6,
**caractérisé**
**en ce que** les éléments (17) de maintien sont formés sur le bord intérieur d'une partie (15) de recouvrement constituée sous la forme d'une bride annulaire et s'étendant par son plan transversalement à l'axe (3) longitudinal médian, la partie (15) fermant au moins en partie l'espace (14) de séparation.

8. Dispositif d'épuration de gaz d'échappement suivant l'une des revendications 1 à 7,
**caractérisé**
**en ce que** les éléments (4) de maintien sont tels qu'ils ont un effet de ressort dans la direction axiale.

9. Dispositif d'épuration de gaz d'échappement suivant la revendication 8,
**caractérisé**
**en ce que** sont associés à un côté (6) frontal plusieurs éléments (4) de maintien ayant un effet de ressort de force différente.

10. Dispositif d'épuration de gaz d'échappement suivant la revendication 8 ou 9,
**caractérisé**
**en ce qu'**un élément (4) de maintien a, dans la direction périphérique, un rétrécissement (18) interposé entre son extrémité (8) libre et sa base (12).

11. Dispositif d'épuration de gaz d'échappement suivant l'une des revendications 1 à 10,
**caractérisé**
**en ce que** les éléments (4) de maintien sont à des distances (5) différentes les uns des autres.

12. Dispositif d'épuration de gaz d'échappement suivant l'une des revendications 1 à 11,
**caractérisé**
**en ce que** les éléments (4) de maintien sont formés directement ou indirectement sur le côté frontal de la partie (1) d'enveloppe entourant le monolithe (2).

13. Dispositif d'épuration de gaz d'échappement suivant l'une des revendications 1 à 12,
**caractérisé**
**en ce que** les éléments (4) de maintien sont immobilisés sur un entonnoir (20) de l'enveloppe monté du côté de l'entrée
ou du côté de la sortie de la partie (1) d'enveloppe.

14. Dispositif d'épuration de gaz d'échappement suivant la revendication 13,
**caractérisé**
**en ce que** l'entonnoir (20) d'enveloppe vient par une partie (28) d'extrémité en étant immobilisé axialement dans une partie (29) d'extrémité de la partie (1) d'enveloppe qui dépasse du côté (6) frontal du monolithe, les éléments (4k, 41) de maintien étant formés du côté frontal sur la partie (28) d'extrémité.

15. Dispositif d'épuration de gaz d'échappement suivant l'une des revendications 1 à 14,
**caractérisé**
**en ce que** les éléments (4) de maintien font partie d'un anneau (39) constitué sous la forme d'une pièce distincte et immobilisés sur le côté intérieur ou extérieur de la partie (1) d'enveloppe.

16. Dispositif d'épuration de gaz d'échappement suivant la revendication 15,
**caractérisé**
**en ce que** l'anneau (39) a une jupe (40) qui s'étend axialement et dont le côté extérieur est relié au côté intérieur de la partie (1) d'enveloppe.
